# EUROPÄISCHE PATENTSCHRIFT

(11) **EP 4 554 777 B1**
(45) Veröffentlichungstag und Bekanntmachung des Hinweises auf die Patenterteilung: **01.07.2026**
(21) Anmeldenummer: 23716775.4
(22) Anmeldetag: 27.03.2023
(51) Int. Cl.: B29C 49/42, B29C 49/46, B29C 49/06, B29K 67/00, B29L 31/00

(54) **GREIFEINRICHTUNG FÜR KOMBINIERTE BEHÄLTNISAUSRICHTUNGS- UND -TRANSPORTEINRICHTUNG**
GRIPPING DEVICE FOR A COMBINED CONTAINER-ORIENTATION- AND TRANSPORT DEVICE
DISPOSITIF DE PRÉHENSION POUR UN DISPOSITIF COMBINÉ D'ORIENTATION ET DE TRANSPORT DE CONTENANTS

(30) Priorität: 15.07.2022 DE 102022117749
(43) Veröffentlichungstag der Anmeldung: 21.05.2025
(73) Patentinhaber: Krones AG, 93073 Neutraubling (DE)
(72) Erfinder: BRIKMANN, Max, 93073 Neutraubling (DE)
(74) Vertreter: Hannke Bittner & Partner mbB Regensburg
(86) Internationale Anmeldenummer: PCT/EP2023/057801
(87) Internationale Veröffentlichungsnummer: WO 2024/012729

(56) Entgegenhaltungen:
- EP-A1- 3 239 077
- EP-A2- 2 444 232
- WO-A1-2021/122712
- DE-A1- 102012 107 811

## Beschreibung

Die vorliegende Erfindung bezieht sich auf eine Greifeinrichtung für Behältnisse, wie sie beispielsweise in Vorrichtungen und Verfahren zum Erwärmen und/oder Umformen von Kunststoffvorformlingen Anwendung finden. Greifeinrichtungen die beispielsweise Kunststoffvorformlinge innerhalb von Öfen, in denen sie für eine anschließende Umformung erwärmt werden, halten und führen sind aus dem Stand der Technik bekannt. Üblicherweise sind derartige Greifeinrichtungen als Greifer oder Haltedorne ausgebildet, welche die Kunststoffvorformlinge im Bereich des Mundstücks von außen (Greifer) oder innen (Dorn) aufnehmen können.

Insbesondere bei der Herstellung von Kunststoffbehältnissen mit nicht kreisförmigen Querschnitten (bezüglich der Behältnislängsrichtung) ist die korrekte Ausrichtung des Behältnisses oder des Behältnisvorformlings (auch als Vorformlinge oder Preforms bezeichnet) wichtig. Aus dem Stand der Technik ist bekannt, auch Behältnisse zu blasen, welche andere als kreisförmige Querschnitte aufweisen, wie beispielsweise ovale Querschnitte. Dies ist mit Problemen verbunden, da nicht nur Blasformen eingesetzt werden müssen, welche von kreisförmigen Querschnitten abweichende Querschnitte aufweisen, sondern zusätzlich auch bereits bei der Erwärmung die korrekte Ausrichtung der Vorformlinge beachtet werden muss, um die Vorformlinge mit einem entlang deren Umfangsrichtung für die anschließende Umformung geeignetem Temperaturprofil zu beaufschlagen. So ist beispielsweise ein Heizverfahren bekannt, bei dem der Kunststoffvorformling mit einer sinusoidalen Temperaturverteilung in Tangentialrichtung beaufschlagt wird.

Ein Beispiel für eine solche Vorrichtung ist aus WO 2021 122 712 A1 bekannt. Sie offenbart eine Vorrichtung zum Herstellen ovaler Behältnisse. Um aus entsprechend temperierten Vorformlingen beispielsweise ovale Behältnisse in entsprechender Güte zu fertigen, müssen die Kunststoffvorformlinge stellungsgerecht in die Blasform eingegeben werden. Dies bedeutet, dass heiße Preform-Seiten und lange Behältnisseiten sowie kalte Preform-Seiten und kurze Behältnisseiten bezüglich der Blasform korrekt ausgerichtet sein müssen. Weitere Gattungsgemäse Vorrichtungen und Verfahren sind in den Patentschriften DE102012107811A1, EP2444232A2 und EP3239077A1 beschrieben.

Dokument DE102012-107811A1 offenbart eine Greifeinrichtung umfassend
- einen Träger,
- ein gegenüber dem Träger relativbewegliches Greifelement zum Greifen eines Behältnisses während dessen Transports entlang eines sich zumindest abschnittsweise innerhalb eines Reinraums befindlichen Transportpfads,
- mindestens eine zweite Antriebseinrichtung zum Verschieben des Greifelements bezüglich des Trägers, wobei die zweite Antriebseinrichtung außerhalb des Reinraums angeordnet sind, wobei zwischen dem Träger und dem Greifelement eine Reinraumgrenze verläuft, die zumindest abschnittsweise durch eine zumindest abschnittsweise bewegliche Dichtungseinrichtung gebildet ist, welche die Übertragung eines außerhalb des Reinraums erzeugten Bewegungsimpulses von der zweiten Antriebseinrichtung an das innerhalb des Reinraums angeordnete Greifelement unter Aufrechterhaltung der Reinraumgrenze ermöglicht.

Weiterhin ist aus dem Stand der Technik bekannt, dass Vorformlinge nach der Beaufschlagung mit einem für den Umformungsprozess geeigneten Temperaturprofil unter Reinraumbedingungen transportiert werden. Dies hat den Vorteil, dass zum Erreichen der Keimfreiheit (die gegebenenfalls bei der Temperaturbeaufschlagung erreicht wird) lediglich die im Vergleich zu umgeformten Behältnissen vergleichsweise kleine Oberfläche der Vorformlinge sterilisiert werden muss. Daraus ergibt sich beispielsweise eine Zeitersparnis, eine Sterilisationsmittelersparnis, eine Verringerung von zu entsorgendem genutztem Sterilisationsmittel und/oder eine Energieeinsparung.

Die Ausrichtung von Vorformlingen bezüglich deren Längsachse während des Transports in einem Reinraum ist mit besonderen Schwierigkeiten verbunden. Um Kontaminationen des einraums zu vermeiden, sollte die Antriebseinrichtung, mittels der das Ausrichten vorgenommen wird, nicht im Reinraum angeordnet sein.

Demzufolge liegt der vorliegenden Erfindung die Aufgabe zugrunde, eine Vorrichtung und ein Verfahren zur Verfügung zu stellen, mittels der Vorformlinge oder Behältnisse innerhalb eines Reinraums ausgerichtet werden können. Dabei sollte eine Kontamination des Reinraums durch die Antriebseinrichtung vermieden werden.

Vorzugsweise sollte eine Halteeinrichtung, welche das zu transportierende Behältnis während dessen Transports durch den Reinraum zumindest abschnittsweise hält, leicht austauschbar sein, um zu ermöglichen, dass die Vorrichtung und das Verfahren für verschiedene Behältnisgeometrien genutzt werden kann. Der Wechsel zwischen verschiedenen Halteeinrichtungen bei einem Wechsel zwischen verschiedenen Behältnisgeometrien sollte möglichst einfach und schnell realisierbar sein.

Diese Aufgabe wird vorrichtungsseitig gemäß den Merkmalen des Patentanspruches 1 gelöst. Verfahrensseitig wird diese Aufgabe durch die Merkmale des Patentanspruchs 9 gelöst. Weitere vorteilhafte Ausführungsformen und Verfahrensvarianten sind Gegenstand der abhängigen Ansprüche.

Ein wesentlicher Aspekt der Erfindung liegt somit in einer Greifeinrichtung, die
- einen Träger,
- ein gegenüber dem Träger relativbewegliches Greifelement zum Greifen eines Behältnisses während dessen Transports entlang eines sich zumindest abschnittsweise innerhalb eines Reinraums befindlichen Transportpfads,
- eine erste Antriebseinrichtung zum Rotieren einer mit einem Greifelement verbundenen Welle und
- mindestens eine zweite Antriebseinrichtung zum Verschieben des Greifelements bezüglich des Trägers,
umfasst. Dabei sind sowohl die erste Antriebseinrichtung als auch die zweite Antriebseinrichtung außerhalb des Reinraums angeordnet.

Diese Greifeinrichtung zeichnet sich insbesondere dadurch aus, dass zwischen dem Träger und dem Greifelement eine Reinraumgrenze verläuft. Diese wird zumindest abschnittsweise durch eine Dichtungseinrichtung gebildet, die wiederum zumindest abschnittsweise beweglich ist. Diese Dichtungseinrichtung ermöglicht die Übertragung eines außerhalb des Reinraums erzeugten Bewegungsimpulses sowohl von der ersten Antriebseinrichtung als auch von der zweiten Antriebseinrichtung an das innerhalb des Reinraums angeordnete Greifelement unter Aufrechterhaltung der Reinraumgrenze. Dadurch ist es möglich, die Antriebe für das Greifelement außerhalb des Reinraums angeordnet sind, wo sie beispielsweise für Wartungsarbeiten leicht zugänglich sind. Außerdem vereinfacht sich die Reinhaltung des Reinraums, da derart komplexe geometrische Strukturen, die viele Vertiefungen aufweisen, die für einige Sterilisationsmittel schlecht zugänglich sind, außerhalb des Reinraums angeordnet sind.

In einer bevorzugten Ausführungsform ist die von der ersten Antriebseinrichtung rotierbare Welle bezüglich des Trägers in deren Längsrichtung verschiebbar. Vorzugsweise ist die erste Antriebseinrichtung mit dieser Welle in deren Längsrichtung verschiebbar. Dadurch ist es vorzugsweise möglich, dass die Welle direkt mit der Antriebseinrichtung verbunden sein kann und keine flexiblen Verbindungselemente zwischen der Antriebseinrichtung und der Welle angeordnet sein müssen. Besonders bevorzugt ist die erste Antriebseinrichtung ein Elektromotor, beispielsweise ein Servomotor, dessen Motorwelle und/oder Rotor eine Rotationsache aufweisen, die eine Verlängerung der Längsachse der Welle ist. Gegebenenfalls kann die Welle eine Verlängerung der Motorwelle und/oder des Rotors sein. Dazu könnten die Welle und die Motorwelle und/oder eine Achse des Rotors einteilig ausgebildet sein.

Die Ausgestaltung der ersten Antriebseinrichtung als Elektromotor bietet darüber hinaus den Vorteil, dass lediglich Kabel als Zuleitung notwendig sind. Diese können flexibel ausgestaltet sein und sind somit bei dem Verschieben der über die Kabel angebundenen Antriebseinrichtung mit der rotierbaren Welle gegenüber dem Trägers so verformbar, dass die elektrische Anbindung der ersten Antriebseinrichtung bestehen bleibt und die Welle weitgehend unabhängig von dem Grad der Verschiebung gegenüber dem Träger mittels der ersten Antriebseinrichtung rotierbar bleibt.

Vorzugsweise wird die Möglichkeit, die erste Antriebseinrichtung mit dieser Welle in deren Längsrichtung verschiebbar auszuführen, dadurch gewährleistet, dass die Antriebseirichtung auf einem ersten Schlitten angeordnet ist, welcher durch die zweite Antriebseinrichtung in Längsrichtung der Welle verschiebbar ist. Die Führung des Schlittens kann (und ist bevorzugt) in radialer Richtung bezüglich der Längserstreckung der Welle versetzt angeordnet. Der Schlitten wird somit auf einer Bahn geführt, die sich parallel zu der Längsachse der Welle erstreckt. Durch das seitliche Versetzen der Bahn, auf der der Schlitten geführt wird gegenüber der Welle kann eine freie und ungehinderte Rotation der Welle ermöglicht werden.

Vorzugsweise ist die Welle zumindest abschnittsweise von einer Hülse umgeben. Diese kann die Welle zusätzlich gegen eine Verlagerung in radialer Richtung stabilisieren. Vorzugsweise ist die Hülse in Längsrichtung der Welle gegenüber dem Träger verschiebbar. Die sich daraus ergebenden Vorteile, insbesondere beim Auslösen der Abgabe eines Behältnisses von dem Greifelement, sind insbesondere im Zusammenhang mit der Beschreibung der Figuren dargelegt. Die Welle und die Hülse sind vorzugsweise unabhängig voneinander gegenüber dem Träger entlang der Längsrichtung der Welle verschiebbar. Dadurch, und in insbesondere durch das Verschieben der Hülse in Richtung des von der ersten Antriebseinrichtung abgewandten Ende der Welle, ist es möglich, ein zuvor von einem mit der Welle verbundenen Greifelement gehaltenes Behältnis abzugeben, beispielsweise das Behältnis aus einer Aufnahme des Greifelements zu drücken oder das Behältnis von einem (beispielsweise innengreifenden) Greifelement abzustreifen.

Bevorzugt weist das Greifelement einen inneren Greifelementteil und einen äußeren Greifelementteil auf. Der äußere Greifelementteil umgibt das innere Greifelementteil zumindest abschnittsweise. Vorzugsweise sind diese beiden Greifelementteile gegenüber einander entlang der Längsrichtung des inneren Greifelementteils relativbeweglich. Die beiden Greifelementteile setzen damit vorzugsweise die Bewegung fort, die oben bezüglich der Welle und der diese (zumindest abschnittsweise) umgebenden Hülse beschrieben sind.

Insbesondere ist in diesem Zusammenhang bevorzugt, dass der innere Greifelementteil als eine Art Dorn ausgebildet ist, welcher zumindest abschnittsweise in ein Behältnis einführbar ist. Vorzugsweise kontaktiert ein solcher Dorn beziehungsweise das innere Greifelementteil zumindest zeitweise (beispielsweise während das Behältnis von der Greifeinrichtung gehalten wird) abschnittsweise Anteile der Innenseite des Behältnisses. Durch das Kontaktieren der Behältnisinnenseite kann eine kraftschlüssige und/oder formschlüssige Verbindung zwischen dem inneren Greifelementteil und dem Behältnis ausgebildet werden. Eine solche kraftschlüssige und/oder formschlüssige Verbindung erlaubt es, eine Bewegung des inneren Greifelementteils besonders genau an das Behältnis zu übertragen. Dies ist insbesondere dann vorteilhaft, wenn eine Rotation des Behältnisses in eine vorbestimmte Ausrichtung bezüglich dessen Längsrichtung gewünscht oder gefordert ist, beispielsweise um es mit einem Temperaturprofil zu beaufschlagen oder es zu einem Behältnis mit nicht kreisförmigem Querschnitt (bezüglich dessen Längsrichtung) umzuformen.

Vorzugsweise kontaktiert auch der äußere Greifelementteil das Behältnis zumindest zeitweise und/oder abschnittsweise. Vorzugsweise kontaktiert der äußere Greifelementteil abschnittsweise Anteile der Außenseite des Behältnisses. Insbesondere bevorzugt kontaktiert der äußere Greifelementteil zeitweise deine äußere Oberfläche des Mundstücks, des Gewindes und/oder eines Tragrings.

Die die Dichtungseinrichtung weist vorzugsweise eine flexible Manschette auf. Die Flexibilität dieser Manschette erlaubt es, dass sie einerseits fixiert ist (beispielsweise an einer Wandung des Reinraums), andererseits jedoch einer Bewegung der Welle und/oder der Hülse folgen kann und damit unabhängig von der Position der Hülse und/oder Manschette dauerhaft die Grenze zwischen Reinraum und Umgebung aufrecht erhalten kann. Dabei ist es nicht notwendig, dass die Manschette alleine die Reinraumgrenze zwischen der Wandung und der Beweglichen Hülse und/oder Manschette bildet. Vielmehr ist es denkbar, dass mehrere Elemente wie beispielsweise eine Dichtung, ein Kugellager und/oder ein "Wasserschloss" (ein in einer mit Flüssigkeit (insbesondere einem Sterilisationsmittel) gefüllten Wanne geführter und zur Wanne relativbeweglicher Vorsprung) gemeinsam die Reinraumgrenze bilden.

Insbesondere ist bevorzugt, dass die Manschette ein Faltenbalg umfasst oder ein Faltenbalg ist. Ein Faltenbalg hat sich als besonders vorteilhaft gezeigt, um zumindest abschnittsweise einer Verschiebung der Hülse und/oder der Welle in deren Längsrichtung gegenüber der Reinraumwandung folgen zu können. Der Faltenbalg und/oder die Manschette weist vorzugsweise einen ersten Abschnitt auf, der im Betriebszustand der Greifeinrichtung gegenüber dem Träger unbeweglich ist und einen anderen zweiten Abschnitt, der im Betriebszustand der Greifeinrichtung gegenüber dem Träger relativbeweglich, vorzugsweise in Längsrichtung der Welle verschiebbar ist. So kann der erste Abschnitt dauerhaft die Dichtigkeit bezüglich der Reinraumwandung sicherstellen, wohingegen der zweite Abschnitt dauerhaft die Dichtigkeit gegenüber der Hülse und/oder Welle gewährleisten kann.

In einer bevorzugten Ausführungsform umfasst die Dichtungseinrichtung ein Kugellager. Dieses kann (vorzugsweise in Kombination mit anderen Dichtelementen wie beispielsweise der oben beschriebenen Manschette) einerseits den Durchtritt von Verunreinigungen durch die Dichtungseinrichtung verhindern oder zumindest reduzieren, andererseits jedoch die Relativbewegung der Hülse und/oder der Welle gegenüber der Reinraumwandung, insbesondere einem bezüglich des Trägers unbeweglichen Anteil der Reinraumwandung, ermöglichen. Vorzugsweise ermöglicht ein solches Kugellager sowohl die Verschiebung der Welle und/oder Hülse in deren Längsrichtung als auch die Rotation der Welle und/oder Hülse um deren Längsachse. Das Kugellager ist vorzugsweise zwischen der Welle oder einer diese Welle umgebenden Hülse und einem bezüglich des Trägers unbeweglichen Teil, vorzugsweise der Reinraumwandung angeordnet. Unabhängig davon ist bevorzugt, dass das Kugellager die Welle und/oder Hülse ringförmig umgibt, was sich als besonders vorteilhaft bezüglich der Lagerung, Führung und Stabilisierung der Welle und/oder Hülse bei beiden oben genannten Relativbewegungen (einzeln oder in deren Kombination) bezüglich der Reinraumwandung gezeigt hat.

In einer bevorzugten Ausführungsform ist zwischen dem ersten Antrieb und der Welle ein Getriebe angeordnet. Vorzugsweise bietet dieses Getriebe eine Untersetzung, was eine genaue Positionierung der Welle und damit auch des mit dieser verbundenen (inneren) Greifelementteils und einem davon gehaltenen Behältnis ermöglicht.

In einer anderen bevorzugten Ausführungsform sind die Welle und die Motorwelle einteilig ausgebildet. Die Welle stellt somit einen außerhalb des Motorgehäuses befindlichen Anteil der Motorwelle dar. Alternativ dazu und ebenfalls bevorzugt, da der Austausch von Teilen bei einem Defekt vereinfacht wird, ist, dass die Motorwelle mit der Welle über ein Kupplungsstück unmittelbar verbunden ist.

Vorzugsweise ist an dem Träger eine Schiene angeordnet, auf welcher ein Schlitten gleiten kann, welcher mindestens den ersten Antrieb trägt. Vorzugsweise bewirkt eine Verschiebung des Schlittens auf der Schiene eine Verschiebung der Welle entlang deren Längsrichtung.

Die Bewegung des Schlittens wird vorzugsweise durch eine Steuerkurve bestimmt, auf welcher vorzugsweise ein erstes Kontaktelement, vorzugsweise eine Rolle des Schlittens gleitet und/oder rollt. Der Schlitten wird vorzugsweise durch ein Druckbeaufschlagungselement, bevorzugt eine Feder, entlang der Längsrichtung der Welle vorgespannt. Dadurch kann das Kontaktelement beziehungsweise die Rolle der Form der Steuerkurve während des Betriebs besonders zuverlässig folgen.

Die Welle ist vorzugsweise unabhängig von der Position des Schlittens auf der Schiene um ihre Längsachse rotierbar. Dementsprechend ist die Rotation der Welle um deren Längsachse vorzugsweise auch dann möglich, wenn der Schlitten durch die Form der Steuerkurve auf der Schiene verschoben ist, beispielsweise angehoben oder abgesenkt.

Vorzugsweise ist die Hülse entlang deren Längsrichtung und/oder Rotationsachse verschiebbar. Vorzugsweise ist sie mit einem Schlitten verbunden, der auf der Schiene des Trägers gleiten kann. Das Verschieben des Schlittens und somit auch der Hülse erfolgt vorzugsweise mittels einer Steuerkurve, auf der ein Kontaktelement, bevorzugt eine Rolle, gleiten und/oder rollen kann. Der Schlitten ist vorzugsweise durch ein Druckbeaufschlagungselement, vorzugsweise eine Feder, entlang der Längsrichtung der Hülse vorgespannt, um zu gewährleisten, dass während des Betriebs das Kontaktelement auf der Steuerkurve aufliegt und deren Form präzise folgt.

Vorzugsweise weist das Greifelement in einem innerhalb des Reinraums gelegenen Abschnitt einen Kopplungsbereich auf. In diesem Kopplungsbereich ist die Welle und/oder die Hülse lösbar mit einem Greifelement verbindbar. Durch diese Ausgestaltung ist es möglich, das Greifelement im Fall eines Defekts zu ersetzen oder es gegen ein anderes Greifelement auszutauschen, welches zum Greifen einer anderen Art von Behältnissen geeignet und eingerichtet ist. Vorzugsweise ist das Greifelement zum Greifen einer bestimmten Behältnisart und/oder mehrere Behältnisarten mit abschnittsweise identischer Geometrie (beispielsweise im Gewindebereich und/oder des Mundstücks) spezifisch. Dazu kann beispielsweise ein Durchmesser eines inneren Greifelementteils an einen Innendurchmesser des Gewindebereichs des zu greifenden Behältnisses angepasst sein.

Vorzugsweise umfasst das Greifelement einen äußeren Greifelementteil und einen inneren Greifelementteil. Dabei umschließt vorzugsweise der äußere Greifelementteil den inneren Greifelementteil zumindest abschnittsweise. Insbesondere ist bevorzugt, dass innere Greifelementteil mit der Welle koppelbar ist und der äußere Greifelementteil mit der Hülse koppelbar ist. Dadurch ist es möglich, Relativbewegungen zwischen Welle und Hülse auch auf das Greifelement, insbesondere den inneren Greifelementteil und den äußeren Greifelementteil zu übertragen und diese somit relativbeweglich zueinander auszugestalten.

Bei einer bevorzugten Ausführungsform handelt es sich bei der Relativbewegung zwischen Welle und Hülse und/oder zwischen äußerem Greifelementteil und innerem Greifelementteil um eine Bewegung entlang und/oder in einer Längsrichtung der Kunststoffbehältnisse oder Kunststoffvorformlinge. Bevorzugt handelt es sich bei der Relativbewegung um eine Bewegung in einer vertikalen Richtung.

Besonders bevorzugt ist das innere Greifelementteil ein Haltedorn, der in einem Arbeitsbetrieb in eine Mündung eines Behältnisses, beispielsweise eines Kunststoffvorformlings einführbar sind, um das Behältnis bez. den Kunststoffvorformling auf diese Weise zu halten.

Vorzugsweise umfasst das Greifelement ein Dichtelement welches einen zwischen dem inneren Greifelementteil und dem äußeren Greifelementteil liegenden Zwischenraum gegenüber dem Reinraum abgrenzt. Der Zwischenraum ist bevorzugt, da dieser die die Relativbewegung zwischen dem inneren Greifelementteil und dem äußeren Greifelementteil begünstigt. Er könnte zumindest abschnittsweise mit einem Gleitmittel gefüllt sein. Das Dichtelement stellt sicher, dass Verunreinigungen aus diesem Zwischenraum nicht in den Reinraum gelangen können. Vorzugsweise ist das Dichtelement eine flexible Manschette, bevorzugt ein Faltenbalg, welcher sich als besonders geeignet erwiesen hat, um die Relativbewegung zwischen dem inneren Greifelementteil und dem äußeren Greifelementteil zu ermöglichen.

Vorzugsweise ist in einem Bereich der Reinraumwandung, in dem die Welle und/oder die Hülse die Reinraumwand durchdringen eine Dichtungseinrichtung vorgesehen. Die Dichtungseinrichtung ist vorzugsweise ringförmig ausgebildet und erstreckt sich weiter bevorzugt entlang der Umfangsrichtung um die Welle und/oder die Hülse. Vorzugsweise überbrückt die Dichtungseinrichtung einen Zwischenraum vollständig, der zwischen den Rändern einer Ausnehmung der Reinraumwand und der Welle oder der Hülse gebildet ist.

Vorzugsweise umfasst die Dichtungseinrichtung ein Kugellager, welches in einem Bereich zwischen der Welle und/oder Hülse und einer flexiblen Manschette angeordnet, deren eines Ende fest mit der Reinraumwandung verbunden ist. Die Flexible Manschette könnte in einer bevorzugten Ausführungsform als Faltenbalg ausgebildet sein.

Das Kugellager umgibt die Hülse und/oder die Welle vorzugsweise ringförmig entlang deren gesamten Umfangs. Das Kugellager ist vorzugsweise zusammen mit der Hülse und/oder die Welle entlang der Längsrichtung der Hülse und/oder die Welle verschiebbar. Vorzugsweise ist lediglich ein innerer Kugellageranteil mit der Hülse und/oder die Welle rotierbar. Ein äußerer Kugellageranteil ist vorzugsweise gegenüber der Reinraumwandung nicht rotierbar.

Vorzugsweise ist die Hülse im Bereich deren reinraumseitigen Ende (in radialer Richtung) verbreitert. Bevorzugt ist in diesem verbreiterten Bereich ein Vorsprung oder mehrere Vorsprünge, angeordnet. Diese bilden vorzugsweise eine Nut aus, die ein komplementäres Rastelement des Greifelements, vorzugsweise des äußeren Greifelementteils aufnehmen kann. Das Rastelement rastet vorzugsweise formschlüssig in diese Nut ein, so dass eine Bewegung der Hülse auf das Rastelement übertragen werden kann. Bei der zu übertragenden Bewegung kann es sich um eine Rotation oder Translation (insbesondere entlang der Längsrichtung der Hülse) handeln.

Die Welle weist in einem reinraumseitigen Endabschnitt bevorzugt eine Ausnehmung auf. Diese Ausnehmung ist vorzugsweise zur zumindest abschnittsweisen Aufnahme eines komplementär ausgebildeten Abschnitts des inneren Greifelementteil ausgebildet und eingerichtet. Bei dem aufzunehmenden Abschnitt des inneren Greifelementteils handelt es sich vorzugsweise um einen Abschnitt einer Kopplungsstange. Insbesondere ist bevorzugt, dass die Kopplungsstange in der Ausnehmung mittels eines Bajonettverschlusses fixierbar ist. Dazu weist die Ausnehmung vorzugsweise mindestens einen Längsschlitz und sich an den Längsschlitz (an dessen entlang der dem Reinraum abgewandten Seite der Welle angeordnetem Ende) anschließenden Querschlitz auf. Die Kopplungsstange weist bevorzugt mindestens einen entsprechenden Vorsprung oder Stift auf, der in diesen Schlitzen gleiten kann. Nach dem Einschieben der Welle mit dem Stift entlang des Längsschlitzes und einem anschließenden Verdrehen der Kopplungsstange mit dem Stift entlang des Querschlitze gelangt der Stift vorzugsweise in eine Rastposition, wodurch die Welle mit der Kopplungsstange formschlüssig verbunden ist und eine Übertragung der Bewegung der Welle (rotatorisch und/oder translatorisch) auf die Kopplungsstange und damit auf den inneren Greifelementteil ermöglicht wird.

Vorzugsweise ist die Verbindung zwischen Welle und/oder Hülse und dem Greifelement (beziehungsweise dem inneren Greifelementteil und/oder dem äußeren Greifelementteil) werkzeuglos lösbar.

Bevorzugt erfolgt die Verbindung zwischen der Hülse und dem äußeren Greifelementteil in einem radialen Abstand von der Rotationsachse der Hülse der sich von einem radialen Abstand der Verbindung der Welle mit dem inneren Greifelementteil von der Rotationsachse der Welle unterscheidet. Die Verbindung zwischen der Hülse und dem äußeren Greifelementteil einerseits und der Welle mit dem inneren Greifelementteil andererseits erfolgt somit vorzugsweise an verschiedenen Positionen bezüglich der Rotationsachse der Welle (und der Hülse). Dadurch ist es möglich, beide Verbindungen getrennt voneinander zu lösen.

Das innere Greifelementteil umfasst vorzugsweise einen Halteabschnitt auf, der zur Kontaktierung eines Behältnisses ausgebildet ist. Der Halteabschnitt ist bevorzugt zumindest abschnittsweise in ein Behältnis einführbar. Vorzugsweise umfasst das innere Greifelementteil ein Spreizelement auf, mittels welchem der Halteabschnitt zumindest abschnittsweise druckbeaufschlagbar ist, um diesen an eine Behältniswandung, bevorzugt eine Behältnisinnenwandung anzudrücken. Bei dem Abschnitt der Behältniswandung handelt es sich besonders bevorzugt um einen Gewindeabschnitt und/oder einen Abschnitt eines Mundstücks des Behältnisses.

Vorzugsweise ist ein Abschnitt des inneren Greifelementteils bezüglich eines Abschnitts des äußeren Greifelementteils verschiebbar. Besonders bevorzugt ist, dass der Halteabschnitt dabei von einem ersten Zustand, in dem er über den Abschnitt des äußeren Greifelementteils übersteht in einen zweiten Zustand überführbar, in dem er nicht über den Abschnitt des äußeren Greifelementteils übersteht. Vorzugsweise handelt es sich bei dem Abschnitt des inneren Greifelementteils um den einen Halteabschnitt, der zur Kontaktierung eines Behältnisses ausgebildet ist. Denkbar wäre jedoch auch (ergänzend oder alternativ dazu) dass durch das Verschieben des Abschnitts des inneren Greifelementteils bezüglich eines Abschnitts des äußeren Greifelementteils der Halteabschnitt lediglich so verformt wird (beispielsweise in radialer Richtung verengt) dass die Druckbeaufschlagung auf das Behältnis nicht mehr zum halten des Behältnisses ausreicht.

Weiterhin betrifft die vorliegende Erfindung eine Transporteinrichtung mit mindestens einer wie oben beschriebenen Greifeinrichtung. Die Transporteinrichtung weist vorzugsweise ein bewegliches Transportelement auf an welchem mindestens eine, bevorzugt eine Vielzahl der Greifeinrichtungen angeordnet ist/sind. Bevorzugt ist dabei der Träger der Greifeinrichtung mit dem Transportelement (fest) verbunden. Vorzugsweise umfasst eine Transporteinrichtung zwischen 8 und 1024, vorzugsweise zwischen 16 und 646 Greifeinrichtungen.

Bei dem beweglichen Transportelement kann es sich vorzugsweise um ein rotierbares Transportelement oder um ein umlaufendes Transportelement wie beispielsweise eine Transportkette handeln. Im Fall eines rotierbaren Transportelements ist bevorzugt, dass dieses um eine zentrale Achse rotierbar ist und so vorzugsweise einen Transportstern ausbildet. Bevorzugt ist die mindestens eine Greifeinrichtung mittels des beweglichen Transportelements entlang einer Kreisbahn führbar.

In Kombination mit der oben beschriebenen Möglichkeit ein Greifelement der Greifeinrichtung zu rotieren, ergibt sich die Möglichkeit, ein transportiertes Behältnis während dessen Transports bezüglich des Transportpfads, der Transporteinrichtung und/oder einer Behandlungseinrichtung wie beispielsweise einer Erwärmungseinrichtung und/oder einer Umformungseinrichtung auszurichten. Ist die Transporteinrichtung ein Transportstern, wird so ein sogenannter Behältnisorientierungsstern gebildet. Analog ist eine solche Ausgestaltung auch bei einer Ausführung des Transportelements als umlaufendes Transportelement wie beispielsweise eine Transportkette möglich.

In einer bevorzugten Ausführungsform bildet das bewegliche Transportelement zumindest einen Abschnitt einer Reinraumwandung. Denkbar ist diesbezüglich beispielsweise, dass das Transportelement eine rotierende Scheibe ist, oberhalb der (und somit außerhalb des Reinraums) ein Träger der Greifeinrichtung angeordnet ist, wobei die Hülse und/oder Welle die Reinraumwandung beziehungsweise die Scheibe durchdringen und unterhalb der Scheibe (und somit innerhalb des Reinraums) das Greifelement ein Behältnis führt.

Vorzugsweise weist eine Transporteinrichtung mindestens eine Steuerkurve auf, auf welcher mindestens ein Kontaktelement einer Greifeinrichtung geführt wird. Vorzugsweise ist die Steuerkurve über das Kontaktelement zumindest abschnittsweise mit der Welle (oder einem die Welle tragenden Element wie beispielsweise einem Schlitten) verbunden. Dadurch ist es bevorzugt möglich, die Welle entlang deren Längsrichtung in Abhängigkeit der Form der Steuerkurve zu verschieben. Die Steuerkurve gibt somit vorzugsweise die Relativbewegung der Welle (und darüber gegebenenfalls auch des Greifelements und/oder einer Hülse) bezüglich des Trägers vor.

Bevorzugt weist eine Transporteinrichtung mindestens zwei Steuerkurven auf, auf welchen mindestens jeweils ein Kontaktelement einer Greifeinrichtung geführt wird. Dadurch wird ermöglicht, die Relativbewegung einer Welle und einer Hülse (und gegebenenfalls einem an Welle und/oder Hülse angeordneten Greifelements), bezüglich des Trägers unabhängig voneinander vorzugeben. Dies ist besonders vorteilhaft, um (beispielsweise wie oben beschrieben) eine Bewegung von Greifelementteilen bezüglich einander zu steuern und so die Aufnahme und/oder das Abgeben eines Behältnisse gezielt auszulösen und/oder mechanisch zu unterstützen.

Die Transporteinrichtung weist vorzugsweise einen Antrieb auf, mittels welchem eine Bewegung des beweglichen Transportelement gesteuert werden kann. Die Antriebseinrichtung ist vorzugsweise außerhalb des Reinraums angeordnet.

In einer bevorzugten Ausführungsform umfasst die Transporteinrichtung eine Verteileinrichtung. Eine solche Verteileinrichtung dient vorzugsweise dazu, ein Medium und/oder ein Signal von einem unbeweglichen Teil der Transporteinrichtung an eine mit dem Transportelement bewegliche Einrichtung zu übertragen.

Bei einem Medium kann es sich beispielsweise um ein Fluid handeln. Dessen Bewegung und/oder Druck kann vorzugsweise genutzt werden, um einen Aktor, beispielsweise der Greifeinrichtung zu steuern. Bei einem solchen Aktor der Greifeinrichtung kann es sich beispielsweise um einen Hydraulikzylinder, einen Motor oder einen anderen Antrieb handeln. Ein solcher Aktor kann beispielsweise eine Behältnisbehandlung auslösen oder durchführen, die vorzugsweise ausgewählt ist aus einer Gruppe, die dessen Rotation, Transport, Ausrichtung, Verschieben, Verformen und Temperaturänderung umfasst. Alternativ oder ergänzend dazu ist auch denkbar, dass der Aktor eine Bewegung des Greifelements (oder eines Teils des Greifelements) auslöst, um beispielsweise ein Behältnis zu greifen oder es loszulassen.

Als Signal, welches von der Verteileinrichtung von einem unbeweglichen Teil der Transporteinrichtung an eine mit dem Transportelement bewegliche Einrichtung übertragen werden kann, handelt es sich vorzugsweise um ein elektrisches Signal, welches vorzugsweise über ein Kabel übertragen wird. Das Signal kann beispielsweise einen Motor ansteuern. Ein von dem Signal ansteuerbarer Motor ist vorzugsweise mit einer wie oben beschriebenen Welle und/oder Hülse wirkverbunden, so dass eine vom Motor erzeugte Rotation an die Welle und/oder Hülse übertragen werden kann.

Vorzugsweise ist die Transporteinrichtung Teil einer Behältnisbehandlungsanlage. Diese Behältnisbehandlungsanlage kann beispielsweise zum Umformen von Behältnissen (beispielsweise Vorformlingen) zu Behältnissen einer anderen Geometrie und/oder zur Temperaturbeaufschlagung des Behältnisses und/oder zum Aufbringen eines Zeichens auf das Behältnis vorgesehen und eingerichtet sein.

Dadurch, dass die Greifeinrichtung vorzugsweise eine Ausrichtung des Behältnisses bezüglich dessen Längsrichtung ermöglicht, kann so die Position und/oder Ausrichtung des Behältnisses bezüglich des Trägers eingestellt werden. Dies ermöglicht wiederum, dass ein bestimmter Behältnisbereich mit einer Temperatur und/oder einem Zeichen (beispielsweise einem Druck und/oder einem Etikett) versehen werden kann und/oder das das Behältnis in einer bestimmten vorgegebenen Ausrichtung einer Umformungseinrichtung (vorzugsweise einer Streckblaseinrichtung) zugeführt werden kann.

In einer bevorzugten Ausführungsform umfasst eine solche Behältnisbehandlungsanlage mehrere wie oben beschriebene Transporteinrichtungen. Dadurch wird die mehrfache Ausrichtung der Behältnisse und eine eventuell vor einem bestimmten Behandlungsprozess notwendige Nachjustierung der Behältnisausrichtung ermöglicht. Beispielsweise kann so ein Behältnis mit einem bestimmten Temperaturprofil versehen werden, anschließend in einer vorgegebenen Ausrichtung einem Umformungsprozess unterzogen werden und anschließend gegebenenfalls an vorgegebenen Positionen mit einem Zeichen versehen werden.

Weiterhin betrifft die vorliegende Erfindung ein Verfahren zum Ausrichten eines Behältnisses entlang dessen Längsachse während dessen Transports innerhalb eines Reinraums. Dieses Verfahren zeichnet sich durch die folgenden Schritte aus:
- Verschieben eines innerhalb eines Reinraums angeordneten Greifelements gegenüber einem Träger mittels einer außerhalb des Reinraums angeordneten zweiten Antriebseinrichtung,
- Greifen eines Behältnisses mittels des Greifelements,
- rotieren des Behältnisses und des Greifelements mittels einer außerhalb des Reinraums angeordneten ersten Antriebseinrichtung,
- Transportieren des durch das Greifelement gehaltenen Behältnisses durch einen den Reinraum, und
- Übergabe des Behältnisses an eine entlang des Transportpfades nachfolgende Behältnisbehandlungseinrichtung oder Behältnistransportvorrichtung.

Dieses Verfahren erlaubt es einerseits ein Behältnis während dessen Transports durch einen Reinraum zu drehen und damit für folgende Arbeitsschritte korrekt auszurichten. Darüber hinaus ermöglicht diese Verfahrensführung die besonders einfache Wartung, da bei dieser Verfahrensführung der Reinraum nicht geöffnet werden muss, falls Wartungsabreiten an der außerhalb des Reinraums angeordneten ersten Antriebseinrichtung vorgenommen werden müssen.

Insbesondere ist bevorzugt, dass das Rotieren des Behältnisses und des Greifelements mittels einer zwischen Antriebseinrichtung und Greifelement angeordnete Welle erfolgt. Die Rotation des Behältnisses erfolgt dabei vorzugsweise um dieselbe Achse, um die auch die Welle rotierbar ist. Diese Verfahrensvariante hat sich im Hinblick auf eine präzise Ausrichtung des Behältnisses als besonders vorteilhaft gezeigt.

In einer bevorzugten Variante des Verfahrens wird ein innerer Greifelementteil gegenüber einem äußeren Greifelementteil, welcher das innere Greifelementteil zumindest abschnittsweise umgibt, bewegt. Bevorzugt wird dabei der innere Greifelementteil in dessen Längsrichtung gegenüber dem äußeren Greifelementteil bewegt. Vorzugsweise wird diese Relativbewegung durch die zweite Antriebseinrichtung ausgelöst. Denkbar ist auch, dass (alternativ oder ergänzend dazu) eine (eventuell zusätzliche) Relativbewegung durch eine weitere, vorzugsweise ebenfalls außerhalb des Reinraums angeordnete dritte Antriebseinrichtung ausgelöst wird.

Bevorzugt kann das Verfahren zum Ausrichten eines Behältnisses entlang dessen Längsachse während dessen Transports innerhalb eines Reinraums mit allen im Rahmen der Greifeinrichtung und/oder der Transporteinrichtung beschriebenen Merkmalen einzeln oder in Kombination miteinander durchgeführt werden. Umgekehrt ist bevorzugt die Greifeinrichtung und/oder der Transporteinrichtung dazu eingerichtet, geeignet und/oder bestimmt, das oben beschriebene Verfahren zum Ausrichten eines Behältnisses entlang dessen Längsachse während dessen Transports innerhalb eines Reinraums sowie alle im Zusammenhang mit dem Verfahren beschriebene Verfahrensschritte einzeln oder in Kombination miteinander oder einzelne Verfahrensschritte unter deren Verwendung auszuführen.

Weitere Vorteile und Ausführungsformen ergeben sich aus den beigefügten Zeichnungen.

### Darin zeigen:

- Fig. 1: eine Darstellung einer Greifeinrichtung in einer bevorzugten Ausführungsform;
- Fig. 2: eine Detaildarstellung der Greifeinrichtung aus Fig. 1 im Bereich der Dichtungseinrichtung; und
- Fig. 3: eine Detaildarstellung der Greifeinrichtung aus Fig. 1 im Kupplungsbereich.

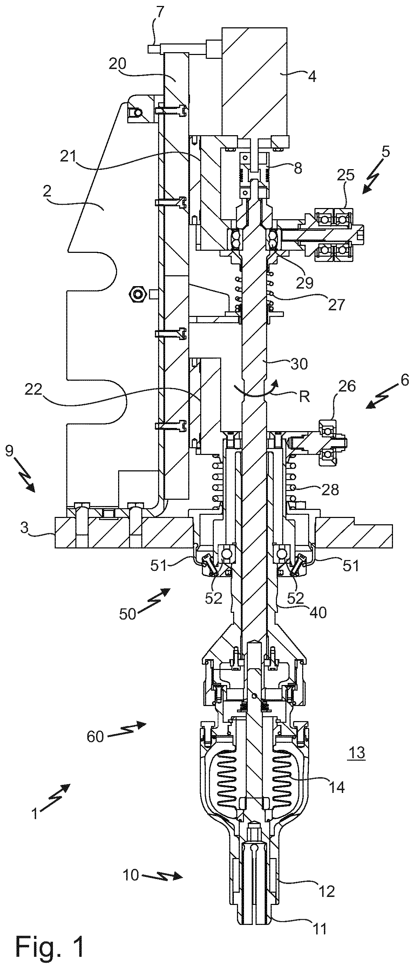

Fig. 1 zeigt eine Darstellung einer Greifeinrichtung 1 in einer bevorzugten Ausführungsform. Diese Darstellung ist eine Schnittdarstellung in einer Ebene, die eine Mittelachse der Welle 30 schneidet. Die Greifeinrichtung 1 weist einen Träger 2 auf, welcher fest mit einer Reinraumwand 3 verbunden ist. Im gezeigten Beispiel weist die Greifeinrichtung einen ersten Antrieb 4, einen zweiten Antrieb 5 und einen dritten Antrieb 6 auf.

Der erste Antrieb 4 ist vorzugsweise ein elektrisch betriebener Motor 4, dessen Rotorwelle 31 in Verlängerung der Welle 30 liegt. Der Motor 4 ist über das Kabel 7 mit einer Energieversorgungseinrichtung und/oder Steuereinrichtung verbunden. Vorzugsweise handelt es sich bei dem Motor 4 um einen Stell und/oder Servomotor. Die Rotorwelle 31 des ersten Antriebs 4 steht über ein Verbindungselement 8 mit der Welle 30 in Wirkverbindung. Durch das Verbindungselement 8 lässt sich die Rotation der Rotorwelle 31 des ersten Antriebs 4 auf die Welle 30 übertragen. Gegebenenfalls kann das Verbindungselement 8 eine Über- oder Untersetzung der Rotationsbewegung bieten, was insbesondere als Untersetzung vorteilhaft zur genauen Positionierung der Welle 30 und damit auch des mit dieser verbundenen (inneren) Greifelementteils 11 und einem davon gehaltenen Behältnis (nicht gezeigt) sein kann.

Der Antrieb 4 und die Welle 30 sind vorzugsweise mittels eines Schlittens 21 gemeinsamen bezüglich des Trägers 2 verschiebbar. Zur Führung des Schlittens ist an dem Träger vorzugsweise eine Schiene 20 angeordnet, auf welcher der Schlitten 21 gleiten kann und welche die Richtung der Verschiebung des Schlittens 21 vorgibt. Vorzugsweise ist der Schlitten 21 entlang der Längsrichtung der Welle 30 beziehungsweise entlang der Rotationsachse R der Welle 30, im gezeigten Beispiel also entlang der Höhenrichtung H verschiebbar.

Der Schlitten 21 weist im gezeigten Ausführungsbeispiel eine erste Rolle 25 auf, welche ein erstes Kontaktelement 25 zu einer nicht gezeigten Steuerkurve darstellt. Die Rolle 25 rollt bevorzugt während der Bewegung des Transportelements 9 auf der Steuerkurve und verschiebt den Schlitten entsprechend der Form einer Abrollfläche der Steuerkurve in Höhenrichtung H den Schlitten 21 in der Höhenrichtung H. Dabei wird vorzugsweise auch die Welle 30 in Höhenrichtung H verschoben.

Vorzugsweise wird der Schlitten 21 durch ein erstes Druckbeaufschlagungselement 27, vorzugsweise eine Feder 27, entlang der Höhenrichtung H vorgespannt. Dadurch wird erreicht, dass das Kontaktelement 25 beziehungsweise die Rolle 25 die (nicht gezeigte) Steuerkurve dauerhaft kontaktiert, auf dieser rollen kann und der Form der Steuerkurve während des Betriebs folgt.

Die Welle 30 ist vorzugsweise unabhängig von deren Position um ihre Längsachse rotierbar. Dementsprechend ist die Rotation der Welle 30 um deren Längsachse (entlang oder entgegen der Rotationsrichtung R) vorzugsweise auch dann möglich, wenn sie entlang der Höhenrichtung H verschoben ist, beispielsweise angehoben oder abgesenkt. Die Rotation ist vorzugsweise dadurch gewährleistet, dass die Welle 30 zumindest abschnittsweise in einer Hülse 40 geführt ist. Die Hülse 40 weist vorzugsweise innenseitig einen geringen Reibungswiderstand gegenüber der Welle 30 auf. Gegebenenfalls kann zwischen Hülse 40 und Welle 30 ein Gleitmittel angeordnet sein. Dieses dichtet vorzugsweise einen Spalt zwischen Welle 30 und Hülse 40 ab.

In der gezeigten Ausführungsform ist auch die Hülse 40 entlang der Höhenrichtung H verschiebbar. Dazu ist auch die Hülse mit einem Schlitten 22 verbunden. Der Schlitten 22 gleitet vorzugsweise ebenfalls auf einer am Träger 2 angeordneten Schiene 20, wobei im gezeigten Beispiel lediglich eine einzige Schiene 20 vorgesehen ist, auf welcher beide Schlitten 21, 22 gleiten können.

Das Verschieben des Schlittens 22 entlang der Höhenrichtung H erfolgt vorzugsweise mittels einer (nicht gezeigten) Steuerkurve. Auf dieser kann ein Kontaktelement 26, welches bevorzugt als Rolle 26 ausgebildet ist, entlang gleiten (oder rollen) und verschiebt dabei vorzugsweise den Schlitten entsprechend der Geometrie der Steuerkurve entlang der Höhenrichtung H. Wie auch oben bezüglich des Schlittens 21 beschrieben ist, ist bevorzugt, dass auch der Schlitten 22 durch ein zweites Druckbeaufschlagungselement 28, vorzugsweise eine Feder 28, entlang der Höhenrichtung H vorgespannt ist. Die Vorspannung gewährleistet, dass während des Betriebs die Rolle 25 auf der (nicht gezeigten) Steuerkurve aufliegt und deren Form präzise folgt.

Die Hülse 40 ist gegenüber dem Schlitten 22 vorzugsweise rotierbar. Dazu ist vorzugsweise ein Kugellager 52 vorgesehen, welches sowohl den Schlitten 22 als auch die Hülse 40 kontaktiert und die Rotation der Hülse 40 gegenüber dem Schlitten 22 möglichst reibungsarm ermöglicht.

Die Rotation der Hülse 40 gegenüber dem Schlitten 22 kann auch die Rotation der Welle 30 (um die Rotationsachse R) gegenüber den Schlitten 21, 22 ermöglichen. So ist denkbar, dass die Welle 30 gegenüber der Hülse 40 nicht oder nur mit erhöhtem Kraftaufwand rotierbar ist. Dennoch ist eine Rotation der Welle mittels des Antriebs 4 möglich, da Welle 30 und Hülse 40 gemeinsam gegenüber dem Schlitten 22 rotiert werden können. Diese Rotation ist durch das Kugellager 52 reibungsarm möglich.

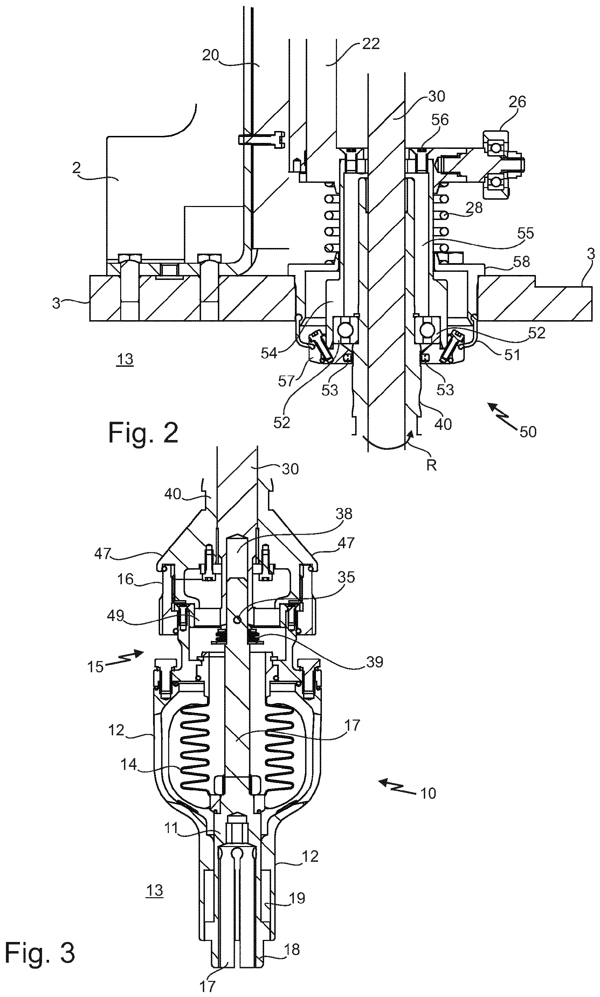

Vorzugsweise befindet sich im Bereich des Kugellagers 52 auch eine Dichtungseinrichtung 50, welche eine Reinraumgrenze 3 bildet. Das Kugellager 52 kann Teil der Dichtungseinrichtung 50 sein. Eine bevorzugte Ausgestaltung dieser Reinraumgrenze 3 in dem Bereich des Kugellagers und der bezüglich der Reinraumgrenze 3 relativbeweglichen Hülse 40 und Welle 30 ist im Detail im Zusammenhang mit Fig. 2 beschrieben und dargestellt.

Innerhalb des Reinraums 13 weist des Greifelement 1 in der gezeigten Ausführungsform einen Kopplungsbereich 60 auf. In diesem Bereich sind Welle 30 und Hülse 40 von einem Greifelement 10 trennbar. Dadurch ist es beispielsweise möglich, das Greifelement im Fall eines Defekts zu ersetzen oder es gegen ein anderes Greifelement 10 auszutauschen, welches zum Greifen einer anderen Art von (nicht gezeigten) Behältnissen geeignet und eingerichtet ist.

Vorzugsweise umfasst ein Greifelement 10 einen inneren Greifelementteil 11 und einen äußeren Greifelementteil 12. Die Geometrie dieser Greifelementteile 11 und 12 kann sich für geschiedene Greifelemente jeweils unterscheiden, um das Greifelement zum Greifen unterschiedlicher Behältnisse einzurichten. Vorzugsweise umschließt der äußere Greifelementteil 12 den inneren Greifelementteil 11 zumindest abschnittsweise. Insbesondere ist bevorzugt, dass innere Greifelementteil 11 mit der Welle koppelbar ist und der äußere Greifelementteil 12 mit der Hülse 40 koppelbar ist. Dadurch ist es möglich, die Relativbewegungen zwischen Welle 30 und Hülse 40 auch auf den inneren Greifelementteil 11 und den äußeren Greifelementteil 12 zu übertragen und diese somit relativbeweglich zueinander auszugestalten.

Um die Relativbewegung zwischen dem inneren Greifelementteil 11 und dem äußeren Greifelementteil 12 zu ermöglichen, ohne dass Verunreinigungen in den Reinraum gelangen können, ist zwischen diesen vorzugsweise ein Dichtelement 14 vorgesehen. Dieses Dichtelement 14 ist vorzugsweise als flexible Manschette, bevorzugt als Faltenbalg 14, ausgebildet.

Fig. 2 zeigt eine Detaildarstellung der Greifeinrichtung aus Fig. 1 im Bereich der Dichtungseinrichtung 50. Die Dichtungseinrichtung 50 ist vorzugsweise im Bereich einer Unterbrechung der Reinraumwand 3 angeordnet, durch welche die Welle 30 und/oder die Hülse 40 (im gezeigten Beispiel Welle 30 und Hülse 40) die Reinraumwand 3 durchdringen.

Um trotz dieser Durchdringung der Reinraumwand 3 die Sterilität des Reinraums 13 aufrecht zu halten ist im Bereich der Öffnung der Reinraumwand 3 die Dichtungseinrichtung 50 vorgesehen. Diese ist vorzugsweise ringförmig um die Welle 30 und/oder die Hülse 40 angeordnet und überbrückt einen Zwischenraum, der zwischen den Rändern einer Ausnehmung der Reinraumwand 3 und der Welle 30 oder der Hülse 40 gebildet ist.

In die Ausnehmung in der Reinraumwand 3 ist vorzugsweise ein Einsatzteil 58 eingesetzt. Dieses schließt die Dichtungseinrichtung 50 vorzugsweise außenseitig gegenüber der Reinraumwand 3 ab. Um die Dichtigkeit an der Kontaktstelle zwischen dem Einsatzteil 58 und der Reinraumwand 3 sicherzustellen, ist in diesem Bereich vorzugsweise ein Wulst der Manschette 51 angeordnet. Diese Manschette 51 ist vorzugsweise aus einem flexiblen Material wie beispielsweise einem Kunststoff oder Gummi, so dass der Wulst als O-Ring oder Dichtung fungieren kann. Vorzugsweise ist er zwischen dem Einsatzteil 58 und der Reinraumwand 3 zumindest teilweise komprimiert. Dies bewirkt eine verbesserte Dichtigkeit der Reinraumgrenze und gleichzeitig eine sichere Fixierung der Manschette 51.

Außerhalb des Reinraums stützt auf dem Einsatzteil 58 vorzugsweise das zweite Druckbeaufschlagungselement 28 beziehungsweise die zweite Feder 28 ab. Sie spannt den zweiten Schlitten 22 vor, so dass dessen zweites Kontaktelement 26 beziehungsweise die zweite Rolle 26 sicher auf der (nicht gezeigten) Steuerkurve geführt wird. Wie im Zusammenhang mit Fig. 1 beschrieben, wird der zweite Schlitten 22 auf einer Schiene 20 geführt, die an einem mit der Reinraumwand 3 verbundenen Träger 2 befestigt ist. Die Schiene erlaubt die gerichtete Verschiebung des Schlittens entlang der Höhenrichtung H.

Der Schlitten 22 ist über ein Verbindungselement 56, hier eine Schraube 56, fest mit einem Gehäuse 54 verbunden, welches die Hülse 40 umgibt. Das Gehäuse 54 bildet somit zumindest bezüglich dessen Bewegung entlang der Höhenrichtung H einen Teil des Schlittens 22. Zwischen dem Gehäuse 54 und der Hülse 40 befindet sich vorzugsweise ein Freiraum 55, wodurch die Reibung der Hülse bei deren Rotation gegenüber dem Schlitten 22 beziehungsweise dem Gehäuse 54 minimiert wird.

Um die Rotation der Hülse 40 gegenüber dem Gehäuse 54 möglichst sicher geführt und dennoch leichtgängig realisieren zu können ist vorzugsweise zwischen der Hülse 40 und dem Gehäuse 54 ein Kugellager 52 angeordnet. Dieses Kugellager 52 umgibt die Hülse 40 vorzugsweise ringförmig entlang deren gesamten Umfangs. Vorzugsweise bildet das Kugellager 52 ein unteres (beziehungsweise reinraumseitiges) Ende des Freiraums 55.

Um eine durch die Steuerkurve vorgegebene Bewegung des Schlittens 22 auf die Hülse zu übertragen, ist das Kugellager 52 mit dessen von der Hülse 40 abgewandten (und somit dem gegenüber der Hülse relativbeweglichen Teil) mit einem Ringelement 57 verbunden, welches mit dem Gehäuse 54 fest verbunden ist. Dieses Ringelement umgibt die Hülse 40 ebenfalls ringförmig, ohne die Hülse 40 jedoch zu fixieren. Dadurch bleibt die Hülse 40 gegenüber dem Ringelement 57 relativbeweglich, insbesondere rotierbar. Dabei ist der Bereich zwischen der Hülse 40 und dem Ringelement 57 vorzugsweise durch eine Dichtung 53, beispielsweise einem O-Ring 53 abgedichtet. Bei einer Rotation der Hülse gegenüber dem Gehäuse 54 und dem Ringelement 57 gleitet die Hülse entlang des O-Rings 53. Dabei verhindert diese Dichtung 53, dass Verunreinigungen in den Reinraum gelangen könnten.

Die Dichtigkeit zwischen dem Ringelement 57 und der Reinraumwandung 3 wird durch die bereits oben beschriebene Manschette 51 gewährleistet. Diese ist vorzugsweise nicht um die Rotationsachse R der Hülse 40 oder der Welle 30 rotierbar. Bevorzugt ist sie aber derart flexibel, dass der mit dem Ringelement 57 verbundene Anteil der Bewegung des Ringelements 57 und damit auch der Hülse 40 entlang der Höhenrichtung H folgen kann. Dieser Anteil der Manschette 51 ist somit gegenüber denjenigen Anteil der Manschette, der zwischen Einsatzteil 58 und der Reinraumwand 3 durch zumindest teilweise Komprimierung fixiert ist, entlang der Höhenrichtung H relativbeweglich. Um eine stärkere Relativbewegung dieser Teile gegenüber einander zu ermöglichen und dennoch die Dichtigkeit dauerhaft gewährleisten zu können ist eine Ausführungsform bevorzugt, bei der die Manschette 51 als Faltenbalg 51 ausgeführt ist. Ein solcher Faltenbalg 51 kann durch die Faltung(en) eine zusätzliche Materialreserve bieten, die auch bei starken Verschiebungen entlang der Höhenrichtung H für Dichtigkeit in diesem Bereich sorgt.

Fig. 3 zeigt eine Detaildarstellung der Greifeinrichtung 1 aus Fig. 1 im Kupplungsbereich 60. Im Bereich dieser Kupplungseinrichtung 60 finden bevorzugt die Verbindung zwischen Hülse 40 und Welle 30 einerseits und dem Greifelement 10 andererseits statt.

Um den für die mechanische Kopplung zur Verfügung stehenden Raum zu vergrößern ist bevorzugt, dass die Hülse 40 im Kupplungsbereich 60 (in radialer Richtung) verbreitert ist. In diesem verbreiterten Bereich der Hülse 40 befindet sich ein Vorsprung 47 oder mehrere Vorsprünge 47, die jeweils komplementäre Rastelemente 16 des äußeren Greifelementteils 12 aufnehmen können. Vorzugsweise rasten die Rastelemente 16 in die durch die Vorsprünge 47 gebildeten Ausnehmungen ein. Die Vorsprünge 47 können eine Vielzahl separater Vorsprünge 47 sein oder durch einen einzigen die Hülse 40 umlaufenden Vorsprung 47 gebildet sein.

Durch die Kopplung der Hülse 40 über die Vorsprünge 47 mit den Rastelementen 16 des äußeren Greifelementteils 12 ist es möglich, die Bewegungen der Hülse 40 auf das äußere Greifelementteil 12 zu übertragen. Bei diesen Bewegungen kann es sich sowohl um einer Rotation (um die hier nicht gezeigte Rotationsachse R), als auch um eine Längsverschiebung (entlang der hier nicht gezeigten Höhenrichtung H) handeln.

Im Bereich des reinraumseitigen Endes der Hülse 40 ist vorzugsweise eine Endplatte 49 vorgesehen, die einen durch die Vorsprünge 47 gebildeten Freiraum begrenzt. Diese Endplatte 49 weist vorzugsweise eine mittige Öffnung auf, durch die die Welle 30 und/oder eine Kopplungsstange 17 des inneren Greifelementteils 11 hindurchtreten können. Ein eventuell zwischen Welle 30 und/oder Kopplungsstange 17 einerseits und der Endplatte 49 andererseits bestehender Zwischenraum ist vorzugsweise durch ein Dichtelement wie beispielsweise einen Faltenbalg 39 überbrückt, um die Dichtigkeit des Reinraums 13 bei einer Relativbewegung der Welle 30 und/oder Kopplungsstange 17 gegenüber der Endplatte 49 sicherzustellen.

Um die Bewegung der Welle 30 auf die Kopplungsstange 17 und damit auf das innere Greifelementteil 11 zu übertragen ist in der gezeigten bevorzugten Ausgestaltung vorgesehen, dass die Welle an ihrem reinraumseitigen Ende eine Ausnehmung 38 aufweist, die einen Abschnitt der Kopplungsstange 17 aufnehmen kann. Vorzugsweise kann die Kopplungsstange 17 in der Ausnehmung mittels eines Bajonettverschlusses 15 fixiert werden. Ein solcher Bajonettverschluss 15 ist bevorzugt, da er die Bewegung der Welle 30 auf die Kopplungsstange 17 und damit auch auf den inneren Greifelementteil 11 kann. Dazu weist die Kopplungsstange 17 vorzugsweise einen Stift 35 oder mehrere Stifte 35 auf, die im Bereich der Ausnehmung 38 in entsprechenden Längsschlitzen und Querschlitzen (in der gezeigten Schnittdarstellung außerhalb der Zeichenebene) in der Wandung der Welle 30 geführt werden können. Nach dem Einführen der Stifte 35 in die Ausnehmung 38 entlang der Längsschlitze und dem anschließenden Verdrehen der Welle 30 gegenüber der Kopplungsstange 17 gleiten die Stifte entlang der Querschlitze in eine Rastposition, so dass eine Formschlüssige Verbindung zwischen Welle 30 und Kopplungsstange 17 hergestellt wird. Diese ermöglicht eine Übertragung der Bewegungen der Welle 30 (um die Rotationsachse als auch entlang der Höhenrichtung) auf den inneren Greifelementteil 11.

Eine wie oben beschriebene lösbare Verbindung sowohl zwischen der Hülse 40 und dem äußeren Greifelementteil 12 als auch der Welle 30 und dem inneren Greifelementteil 11 ermöglicht die außerhalb des Reinraums erzeugte Relativbewegung zwischen Welle 30 und Hülse 40 auf den inneren Greifelementteil 11 und den äußeren Greifelementteil 12 zu übertragen. Zusätzlich bietet die beschriebene Ausführungsform aber auch die Möglichkeit, das innere Greifelementteil 11 von der Welle 30 und das äußere Greifelementteil 12 von der Hülse zu entkoppeln und damit das gesamte Greifelement 10 zu lösen. Dies vereinfacht einen Austausch eines Greifelements 10 gegen ein anderes Greifelement 10 und ist vorzugsweise sogar werkzeuglos möglich.

Wie oben dargelegt erfolgt die Kopplung zwischen der Hülse 40 und dem äußeren Greifelementteil 12 vorzugsweise in einem anderen radialen Abstand von der Rotationsachse als die Kopplung der Welle 30 mit dem inneren Greifelementteil 11. Um das Gewicht des äußeren Greifelementteils 12 trotz des vergleichsweise großen Radius möglichst gering zu halten, ist dessen Außenwandung vorzugsweise nicht vollflächig ausgebildet sondern weist Öffnungen auf. Insbesondere ist bevorzugt, dass das äußeren Greifelementteil 12 einen Raum ausbildet, durch den sich die Kopplungsstange 17 abschnittsweise erstreckt, wobei der Raum bevorzugt durch Stege definiert ist, zwischen denen sich Ausnehmungen befinden. Um dennoch eine Kontamination des Reinraums (beispielsweise durch Abrieb oder andere Kontaminationen zwischen innerem Greifelementteil 11 und äußerem Greifelementteil 12) zu vermeiden, ist das innere Greifelementteil 11 bevorzugt gegenüber dem äußeren Greifelementteil 12 durch einen Faltenbalg 14 gesichert.

Das innere Greifelementteil 11 umfasst vorzugsweise einen Halteabschnitt 18, der die Kontaktfläche 18 zu einem aufzunehmenden Behältnis bildet. Dieser kann vorzugsweise zumindest abschnittsweise in ein Behältnis eingeführt werden und beispielsweise einen Gewindeabschnitt und/oder ein Mundstück des Behältnisses von innen Druckbeaufschlagen. Dazu werden die Kontaktflächen 18 durch ein Spreizelement 17 an die Behältnisinnenwandung angedrückt.

Wird ein Behältnis durch das innere Greifelementteil 11 gehalten, kann es entlang der Rotationsache R (in Fig. 3 nicht gezeigt) rotiert werden. Dies ermöglicht eine exakte Ausrichtung des Behältnisses bezüglich dessen Längsachse. Durch die wie oben beschriebene Übertragung der außerhalb des Reinraums 3 erzeugten Rotation der Welle 30 und der Übertragung dieser Bewegung über den Kopplungsbereich 60 an das innerhalb des Reinraums 3 befindliche Greifelement 10 beziehungsweise den inneren Greifelementteil 11, ist eine besonders exakte Ansteuerung und Übertragung der Rotationsbewegung auf das Behältnis möglich.

Soll ein gehaltenes Behältnis abgegeben werden, kann durch die wie oben beschriebene Relativbewegung von Welle 30 und Hülse 40 beziehungsweise der analogen Relativbewegung des inneren Greifelementteils 11 gegenüber dem äußeren Greifelementteil 12 entlang der Höhenrichtung H und/oder der Längsrichtung der Welle 30 verschoben werden. Dazu ist vorzugsweise durch den äußeren Greifelementteil 12 eine Aufnahme 19 gebildet in die die Kontaktflächen 18 des inneren Greifelementteils 11 zurückgezogen werden können. Dabei wird auch ein eventuell gehaltenes Behältnis zunächst in diese Richtung bewegt, wird dann jedoch in der Bewegung gestoppt, da dessen Mundstück und/oder Gewindeabschnitt an die Wandungen der Aufnahme 19 anstößt. Beim weiteren Einziehen des inneren Greifelementteils 11 und damit auch der Kontaktflächen 18 verringert sich die Druckbeaufschlagung durch die Kontaktflächen 18 ständig, bis diese Kraft nicht mehr ausreicht, um das Behältnis zu tragen. Das Behältnis wir zu diesem Zeitpunkt von der Greifeinrichtung losgelassen und kann beispielsweise von einer entlang des Transportpfads nachfolgenden Transporteinrichtung übernommen werden.

### Bezugszeichenliste

- 1: Greifeinrichtung
- 2: Träger
- 3: Reinraumwand, Reinraumgrenze
- 4: erster Antrieb, Motor
- 5: zweiter Antrieb
- 6: dritter Antrieb
- 7: Kabel
- 8: Verbindungselement
- 9: Transportelement
- 10: Greifelement
- 11: innerer Greifelementteil, Innengreifer, Dorn
- 12: äußerer Greifelementteil
- 13: Reinraum
- 14: Dichtelement, flexible Manschette, Faltenbalg
- 15: Bajonettverschluss
- 16: Rastelement
- 17: Spreizelement
- 18: Halteabschnitt, Kontaktfläche
- 19: Aufnahme
- 20: Schiene
- 21: erster Schlitten
- 22: zweiter Schlitten
- 25: erstes Kontaktelement, erste Rolle
- 26: zweites Kontaktelement, zweite Rolle
- 27: erstes Druckbeaufschlagungselement, erste Feder
- 28: zweites Druckbeaufschlagungselement, zweite Feder
- 29: Kugellager
- 30: Welle
- 31: Rotorwelle
- 35: (federgelagerter) Stift, Vorsprung, Bolzen
- 38: Ausnehmung
- 39: Dichtelement, Faltenbalg
- 40: Hülse
- 47: Vorsprung, Vorsprünge
- 49: Endplatte
- 50: Dichtungseinrichtung
- 51: Manschette, Faltenbalg
- 52: Kugellager
- 53: Dichtung, O-Ring
- 54: Gehäuse
- 55: Freiraum
- 56: Verbindungselement, Schraube
- 57: Ringelement
- 58: Einsatzteil
- 60: Kupplungsbereich
- H: Höhenrichtung
- R: Rotationsachse der Welle

## Patentansprüche

1. Greifeinrichtung (1) umfassend
- einen Träger (2),
- ein gegenüber dem Träger (2) relativbewegliches Greifelement (10) zum Greifen eines Behältnisses während dessen Transports entlang eines sich zumindest abschnittsweise innerhalb eines Reinraums (13) befindlichen Transportpfads,
- eine erste Antriebseinrichtung (4) zum Rotieren einer mit einem Greifelement (10) verbundenen Welle (30) und
- mindestens eine zweite Antriebseinrichtung (5, 6) zum Verschieben des Greifelements (10) bezüglich des Trägers (2),
wobei die erste Antriebseinrichtung (4) und die zweite Antriebseinrichtung (5, 6) außerhalb des Reinraums (13) angeordnet sind,
wobei zwischen dem Träger (2) und dem Greifelement (10) eine Reinraumgrenze (3) verläuft, die zumindest abschnittsweise durch eine zumindest abschnittsweise bewegliche Dichtungseinrichtung (50) gebildet ist, welche die Übertragung eines außerhalb des Reinraums (13) erzeugten Bewegungsimpulses sowohl von der ersten Antriebseinrichtung (4) als auch von der zweiten Antriebseinrichtung (5, 6) an das innerhalb des Reinraums (13) angeordnete Greifelement (10) unter Aufrechterhaltung der Reinraumgrenze (3) ermöglicht.

2. Greifeinrichtung (1) nach Anspruch 1,
**dadurch gekennzeichnet, dass**
die von der ersten Antriebseinrichtung (4) rotierbare Welle (30) bezüglich des Trägers (2) in deren Längsrichtung (H) verschiebbar ist, wobei die Welle (30) bevorzugt zumindest abschnittsweise von einer Hülse (40) umgeben ist, welche vorzugsweise in Längsrichtung (H) der Welle (30) gegenüber dem Träger (2) verschiebbar ist, wobei die Welle (30) und die Hülse (40) vorzugsweise unabhängig voneinander gegenüber dem Träger (2) entlang der Längsrichtung (H) der Welle (30) verschiebbar sind.

3. Greifeinrichtung (1) nach einem der vorangehenden Ansprüche,
**dadurch gekennzeichnet, dass**
das Greifelement (10) einen inneren Greifelementteil (12) und einen äußeren Greifelementteil (12), welcher das innere Greifelementteil (11) zumindest abschnittsweise umgibt, aufweist, wobei diese beiden Greifelementteile (11, 12) gegenüber einander entlang der Längsrichtung (H) des inneren Greifelementteils (11) relativbeweglich sind.

4. Greifeinrichtung (1) nach einem der vorangehenden Ansprüche,
**dadurch gekennzeichnet, dass**
die Dichtungseinrichtung (50) eine flexible Manschette (51), vorzugsweise einen Faltenbalg (51) aufweist, die einen ersten Abschnitt aufweist, der im Betriebszustand der Greifeinrichtung (1) gegenüber dem Träger (2) unbeweglich ist und einen anderen zweiten Abschnitt, der im Betriebszustand der Greifeinrichtung (1) gegenüber dem Träger (2) relativbeweglich, vorzugsweise in Längsrichtung (H) der Welle (30) verschiebbar ist.

5. Greifeinrichtung (1) nach einem der vorangehenden Ansprüche,
**dadurch gekennzeichnet, dass**
die Dichtungseinrichtung (50) ein Kugellager (52) umfasst, welches zwischen der Welle (30) oder einer diese Welle (30) umgebenden Hülse (40) und einem bezüglich des Trägers (2) unbeweglichen Teil (3, 58), vorzugsweise der Reinraumwandung (3) angeordnet ist.

6. Transporteinrichtung mit mindestens einer Greifeinrichtung (1) nach einem der vorangehenden Ansprüche, wobei die Transporteinrichtung vorzugsweise ein bewegliches Transportelement aufweist an welchem mindestens eine, bevorzugt eine Vielzahl der Greifeinrichtungen (1) angeordnet ist/sind.

7. Transporteinrichtung nach Anspruch 6,
**dadurch gekennzeichnet, dass**
die mindestens eine Greifeinrichtung (1) mittels des beweglichen Transportelements entlang einer Kreisbahn führbar ist, wobei das bewegliche Transportelement zumindest einen Abschnitt einer Reinraumwandung (3) bildet.

8. Transporteinrichtung nach einem der Ansprüche 6 oder 7,
**gekennzeichnet durch**,
mindestens eine Steuerkurve, bevorzugt mindestens zwei Steuerkurven, auf welcher/welchen mindestens ein Kontaktelement (25, 26) einer Greifeinrichtung (1) geführt wird, die Relativbewegung des Greifelements (10), einer Welle (30) und/oder einer Hülse (40) bezüglich des Trägers (2), vorgibt.

9. Verfahren zum Ausrichten eines Behältnisses entlang dessen Längsachse während dessen Transports innerhalb eines Reinraums (13),
**gekennzeichnet durch** die Schritte:
Verschieben eines innerhalb eines Reinraums (13) angeordneten Greifelements (10) gegenüber einem Träger (2) mittels einer außerhalb des Reinraums (13) angeordneten zweiten Antriebseinrichtung (5, 6),
Greifen eines Behältnisses mittels des Greifelements (10),
rotieren des Behältnisses und des Greifelements (10) mittels einer außerhalb des Reinraums (13) angeordneten ersten Antriebseinrichtung (4), vorzugsweise um eine zwischen Antriebseinrichtung (4) und Greifelement (10) angeordnete Welle (30), Transportieren des durch das Greifelement (10) gehaltenen Behältnisses durch den Reinraum (13), und
Übergabe des Behältnisses an eine entlang des Transportpfades nachfolgende Behältnisbehandlungseinrichtung oder Behältnistransportvorrichtung.

10. Verfahren nach Anspruch 9,
**dadurch gekennzeichnet, dass**
ein innerer Greifelementteil (11) bevorzugt in dessen Längsrichtung (H) gegenüber einem äußeren Greifelementteil (12), welcher das innere Greifelementteil (11) zumindest abschnittsweise umgibt, bewegt wird, wobei diese Relativbewegung vorzugsweise durch die zweite Antriebseinrichtung (5, 6) und/oder eine weitere, vorzugsweise ebenfalls außerhalb des Reinraums (13) angeordnete dritte Antriebseinrichtung (5, 6) ausgelöst wird.

## Claims

1. A gripping device (1) comprising:
- a carrier (2),
- a gripping element (10) which is movable with respect to the carrier (2) for gripping a container during transport thereof along a transport path arranged at least in portions inside a clean room (13),
- a first drive device (4) for rotating a shaft (30) connected to a gripping element (10), and
- at least one second drive device (5, 6) for shifting the gripping element (10) with respect to the carrier (2),
wherein the first drive device (4) and the second drive device (5, 6) are arranged outside the clean room (13), wherein
a clean room boundary (3) extends between the carrier (2) and the gripping element (10), which boundary is formed at least in portions by an at least partially movable sealing device (50), which allows the transmission of a movement pulse generated outside the clean room (13) from both the first drive device (4) and the second drive device (5, 6) to the gripping element (10) arranged inside the clean room (13) while maintaining the clean room boundary (3).

2. The gripping device (1) according to claim 1,
**characterized in that**
the shaft (30) rotatable by the first drive device (4) is shiftable with respect to the carrier (2) in its longitudinal direction (H), wherein the shaft (30) is preferably surrounded at least in portions by a sleeve (40) which is preferably shiftable in the longitudinal direction (H) of the shaft (30) with respect to the carrier (2), wherein the shaft (30) and the sleeve (40) are preferably shiftable independently of one another with respect to the carrier (2) along the longitudinal direction (H) of the shaft (30).

3. The gripping device (1) according to any of the preceding claims, **characterized in that**
the gripping element (10) has an inner gripping element part (12) and an outer gripping element part (12) which surrounds the inner gripping element part (11) at least in portions, wherein these two gripping element parts (11, 12) can be moved with respect to one another along the longitudinal direction (H) of the inner gripping element part (11).

4. The gripping device (1) according to any of the preceding claims, **characterized in that**
the sealing device (50) has a flexible collar (51), preferably a bellows (51), which has a first portion which is immovable with respect to the carrier (2) when the gripping device (1) is in the operating state and another second portion which is movable with respect to the carrier (2) when the gripping device (1) is in the operating state, preferably shiftable in the longitudinal direction (H) of the shaft (30).

5. The gripping device (1) according to any of the preceding claims, **characterized in that**
the sealing device (50) comprises a ball bearing (52) which is arranged between the shaft (30) or a sleeve (40) surrounding this shaft (30) and a part (3, 58) which is immovable with respect to the carrier (2), preferably the clean room wall (3).

6. A transport device with at least one gripping device (1) according to any of the preceding claims, wherein the transport device preferably has a movable transport element on which at least one, preferably a plurality of the gripping devices (1) is/are arranged.

7. The transport device according to claim 6,
**characterized in that**
the at least one gripping device (1) can be guided along a circular path by the movable transport element, wherein the movable transport element forms at least a portion of a clean room wall (3).

8. The transport device according to any of claims 6 or 7,
**characterized by**
at least one control cam, preferably at least two control cams, on which at least one contact element (25, 26) of a gripping device (1) is guided, which specifies the relative movement of the gripping element (10), a shaft (30) and/or a sleeve (40) with respect to the carrier (2).

9. A method for aligning a container along its longitudinal axis during the transport thereof within a clean room (13),
**characterized by** the steps:
shifting a gripping element (10) arranged within a clean room (13) with respect to a carrier (2) by a second drive device (5, 6) arranged outside the clean room (13),
gripping a container by the gripping element (10),
rotating the container and the gripping element (10) by a first drive device (4) arranged outside the clean room (13), preferably about a shaft (30) arranged between the drive device (4) and the gripping element (10), transporting the container held by the gripping element (10) through the clean room (13), and
transferring the container to a downstream container treatment device or container transport apparatus along the transport path.

10. The method according to claim 9,
**characterized in that**
an inner gripping element part (11) is preferably moved in its longitudinal direction (H) with respect to an outer gripping element part (12) which surrounds the inner gripping element part (11) at least inin portions, wherein this relative movement is preferably triggered by the second drive device (5, 6) and/or a further third drive device (5, 6) which is preferably also arranged outside the clean room (13).

## Revendications

1. Système de préhension (1) comprenant
- un support (2),
- un élément de préhension (10) relativement mobile par rapport au support (2) destiné à saisir un récipient pendant son transport le long d'un trajet de transport se trouvant au moins par endroits à l'intérieur d'une salle blanche (13),
- un premier système d'entraînement (4) destiné à faire tourner un arbre (30) relié à un élément de préhension (10) et
- au moins un deuxième système d'entraînement (5, 6) destiné à faire coulisser l'élément de préhension (10) par rapport au support (2),
dans lequel le premier système d'entraînement (4) et le deuxième système d'entraînement (5, 6) sont disposés à l'extérieur de la salle blanche (13),
dans lequel une limite de salle blanche (3) s'étend entre le support (2) et l'élément de préhension (10), laquelle est formée au moins par endroits par un système d'étanchéité (50) mobile au moins par endroits, qui permet la transmission d'une impulsion de mouvement générée à l'extérieur de la salle blanche (13) à la fois par le premier système d'entraînement (4) et par le deuxième système d'entraînement (5, 6) à l'élément de préhension (10) disposé à l'intérieur de la salle blanche (13) tout en maintenant la limite de salle blanche (3).

2. Système de préhension (1) selon la revendication 1, **caractérisé en ce que**
l'arbre (30) pouvant être tourné par le premier système d'entraînement (4) peut être coulissé par rapport au support (2) dans sa direction longitudinale (H), dans lequel l'arbre (30) est entouré de manière préférée au moins endroits d'une douille (40) qui peut être coulissée de préférence dans la direction longitudinale (H) de l'arbre (30) par rapport au support (2), dans lequel l'arbre (30) et la douille (40) peuvent être coulissés de préférence indépendamment l'un de l'autre par rapport au support (2) le long de la direction longitudinale (H) de l'arbre (30).

3. Système de préhension (1) selon l'une quelconque des revendications précédentes,
**caractérisé en ce que**
l'élément de préhension (10) présente une partie d'élément de préhension intérieure (12) et une partie d'élément de préhension extérieure (12), qui entoure la partie d'élément de préhension intérieure (11) au moins par sections, dans lequel lesdites deux parties d'élément de préhension (11, 12) sont mobiles relativement l'une par rapport à l'autre le long de la direction longitudinale (H) de la partie d'élément de préhension intérieure (11).

4. Système de préhension (1) selon l'une quelconque des revendications précédentes,
**caractérisé en ce que**
le système d'étanchéité (50) présente un manchon flexible (51), de préférence un soufflet (51), qui présente une première section qui, dans l'état de fonctionnement du système de préhension (1), est immobile par rapport au support (2), et une autre deuxième section qui, dans l'état de fonctionnement du système de préhension (1), est relativement mobile par rapport au support (2), de préférence peut être coulissée dans la direction longitudinale (H) de l'arbre (30).

5. Système de préhension (1) selon l'une quelconque des revendications précédentes,
**caractérisé en ce que**
le système d'étanchéité (50) comprend un roulement à billes (52) qui est disposé entre l'arbre (30) ou une douille (40) entourant ledit arbre (30) et une partie (3, 58) immobile par rapport au support (2), de préférence la paroi de salle blanche (3).

6. Système de transport avec au moins un système de préhension (1) selon l'une quelconque des revendications précédentes, dans lequel le système de transport présente de préférence un élément de transport mobile sur lequel au moins un, de préférence une pluralité des systèmes de préhension (1) est/sont disposé(s).

7. Système de transport selon la revendication 6, **caractérisé en ce que**
l'au moins un système de préhension (1) peut être guidé le long d'une trajectoire circulaire au moyen de l'élément de transport mobile, dans lequel l'élément de transport mobile forme au moins une section d'une paroi de salle blanche (3).

8. Système de transport selon l'une quelconque des revendications 6 ou 7,
**caractérisé par**
au moins une came de commande, de manière préférée au moins deux cames de commande, sur laquelle/lesquelles au moins un élément de contact (25, 26) d'un système de préhension (1) est guidé, qui prédéfinit le mouvement relatif de l'élément de préhension (10), d'un arbre (30) et/ou d'une douille (40) par rapport au support (2).

9. Procédé d'alignement d'un récipient le long de son axe longitudinal pendant son transport à l'intérieur d'une salle blanche (13),
**caractérisé par** les étapes :
le coulissement d'un élément de préhension (10) disposé à l'intérieur d'une salle blanche (13) par rapport à un support (2) au moyen d'un deuxième système d'entraînement (5, 6) disposé à l'extérieur de la salle blanche (13),
la préhension d'un récipient au moyen de l'élément de préhension (10),
la rotation du récipient et de l'élément de préhension (10) au moyen d'un premier système d'entraînement (4) disposé à l'extérieur de la salle blanche (13), de préférence autour d'un arbre (30) disposé entre le système d'entraînement (4) et l'élément de préhension (10),
le transport du récipient maintenu par l'élément de préhension (10) à travers la salle blanche (13), et
le transfert du récipient à un système de traitement de récipients ou un dispositif de transport de récipients suivant le trajet de transport.

10. Procédé selon la revendication 9,
**caractérisé en ce que**
une partie d'élément de préhension intérieure (11) est déplacée de manière préférée dans sa direction longitudinale (H) par rapport à une partie d'élément de préhension extérieure (12), qui entoure au moins par endroits la partie d'élément de préhension intérieure (11), dans lequel ledit mouvement relatif est déclenché de préférence par le deuxième système d'entraînement (5, 6) et/ou un autre troisième système d'entraînement (5, 6) disposé de préférence également à l'extérieur de la salle blanche (13).
